# EUROPÄISCHE PATENTSCHRIFT

(11) **EP 1 536 972 B1**
(45) Veröffentlichungstag und Bekanntmachung des Hinweises auf die Patenterteilung: **22.12.2010**
(21) Anmeldenummer: 03747074.7
(22) Anmeldetag: 30.01.2003
(51) Int. Cl.: B60K 35/00, B60R 11/02, G01C 21/36

(54) **VERFAHREN ZUR BEDIENUNGSSTEUERUNG VON ELEKTRONISCHEN GERÄTEN UND ELEKTRONISCHES GERÄT**
METHOD FOR CONTROLLING THE OPERATION OF ELECTRONIC EQUIPMENT AND CORRESPONDING ELECTRONIC EQUIPMENT
PROCEDE DE COMMANDE D'EXPLOITATION D'APPAREILS ELECTRONIQUES ET APPAREIL ELECTRONIQUE

(30) Priorität: 26.04.2002 DE 10218681
(43) Veröffentlichungstag der Anmeldung: 08.06.2005
(73) Patentinhaber: ROBERT BOSCH GMBH, 70442 Stuttgart (DE)
(72) Erfinder: ENGELSBERG, Andreas, 31141 Hildesheim (DE); KUSSMANN, Holger, 31180 Giesen (DE); MECKE, Sven, 31139 Hildesheim (DE)
(86) Internationale Anmeldenummer: PCT/DE2003/000245
(87) Internationale Veröffentlichungsnummer: WO 2003/091060

(56) Entgegenhaltungen:
- EP-A- 0 771 686
- EP-A- 0 933 743
- EP-A- 1 031 456
- EP-A- 1 205 359
- WO-A-98/07595
- DE-A- 4 204 996
- DE-A- 19 958 791
- DE-C- 19 952 857

## Beschreibung

Die Erfindung betrifft ein Verfahren zur Bedienungssteuerung von elektronischen Geräten mit Bedienungseingabemitteln.

Die Erfindung betrifft weiterhin ein elektronisches Gerät mit einem Prozessor und mit Bedienungseingabemitteln, wobei eine Bedienungssteuerung durch Auswahl von Parametern erfolgt.

Die Bedienung von elektronischen Geräten ist relativ komplex und erfordert die Aufmerksamkeit des Bedieners. Insbesondere bei elektronischen Geräten in Fahrzeugen darf die Bedienung der Geräte, beispielsweise Unterhaltungs- und Informationssysteme, die Aufmerksamkeit des Fahrers nicht beeinflussen.

Die Bedienungsabläufe für herkömmliche elektronische Geräte, um einen bestimmten Zustand zu erzielen, sind statisch aufgebaut. Um eine Funktion des elektronischen Gerätes zu aktivieren oder eine bestimmte Information zu erhalten, muss beispielsweise immer der gleiche Dialog mit einem Benutzermenü durchlaufen werden.

In der DE 199 52 857 C1 ist eine Vorrichtung zur fahrerzustandsabhängigen Steuerung von Fahrzeugkomponenten beschrieben, bei der der Fahrerzustand bestimmt wird und davon abhängig eine Informationsfilterung von darzustellenden Informationen vorgenommen wird. Hierdurch wird die Bedienung und Steuerung durch den Fahrer verbessert und die Sicherheit erhöht, da der Fahrer entlastet wird. Bei der Vorrichtung wird die Bedienung einer Funktionalität des elektronischen Gerätes situationsabhängig eingeschränkt: Beispielsweise kann die Zieleingabe eines Navigationsgeräts während der Fahrt nicht genutzt werden oder ein Fernseher nicht eingeschaltet werden. Ebenso ist denkbar, in Abhängigkeit von der Fahrgeschwindigkeit eine komplett Anwendung oder Teilfunktionalitäten einer Anwendung des elektronischen Gerätes ein- oder auszuschalten.

Weiterhin sind Bedienungssteuerungen von elektronischen Geräten bekannt, bei denen beispielsweise für Navigationssysteme eingegebene Worte durch eine automatische Routenzielschätzung während der Routenzieleingabe vervollständigt werden.

Es ist ferner bekannt, bedienerabhängig gespeicherte Profile zur automatischen Einstellung von Diensten und Applikationen von Fahrzeugen, wie z. B. die Lautstärke eines Autoradios, die Sitz- und Klimaeinstellung etc. vorzunehmen.

Das Problem der herkömmlichen Bedienungs- und Steuerungsverfahren ist, dass diese relativ statisch und nicht auf die Situation des Bedieners ausgerichtet sind.

Aufgabe der Erfindung war es, eine verbesserte Bedienungssteuerung von elektronischen Geräten und ein entsprechendes elektronisches Gerät zu schaffen, das eine situationsbedingte optimale Bedienung des elektronischen Gerätes ermöglicht.

Die Aufgabe wird mit dem Verfahren nach Anspruch 1 gelöst.

Erfindungsgemäß wird somit die Bedienungseingabe umso mehr unterstützt, je mehr der Bediener beispielsweise durch eine anspruchsvollere Verkehrssituation belastet ist. Im Unterschied zu herkömmlichen elektronischen Geräten wird jedoch nicht einfach die Nutzung einer Anwendung zugelassen oder verboten, sondern der Unterstützungsgrad bei der Bedienung in Abhängigkeit der Bedienerbelastung variiert.

Die Unterstützung der Bedienungseingabe erfolgt beispielsweise durch die automatische Vorgabe von Parametern, die aus bedienerabhängig gespeicherten Bedienungsprofilen ausgewählt werden. So können beispielsweise die von einem Bediener üblicherweise genutzten Steuerungs- oder Auswahlparameter ausgewertet und in dem elektronischen Gerät abgespeichert werden. Diese abgespeicherten Parameter werden dann in Abhängigkeit von dem Grad der Unterstützung, die wiederum von der Bedienerbelastung abhängig ist, automatisch ausgewählt und für die weitere Bedienungssteuerung zu Grunde gelegt.

Die Aufgabe wird weiterhin durch das elektronische Gerät nach Anspruch 4 gelöst.

In dem elektronischen Gerät ist vorzugsweise weiterhin eine Liste zur bedienerabhängigen Speicherung von Bedienungsprofilen vorgesehen, wobei die vorgegebenen Parameter aus der Liste automatisch ausgewählt werden. Bei der Unterstützung der Bedienungseingabe kann somit eine automatische Vorgabe von Parametern in Abhängigkeit von üblicherweise durch den aktuellen Bediener vorgenommenen Bedienungsschritten erfolgen.

Vorzugsweise sind zudem Steuerungsmittel zur Beendigung der Bedienungseingabe vorgesehen, wobei die Bedienungssteuerung in Abhängigkeit von durch den Bediener über die Bedienungseingabemittel eingegebenen Parametern und von weiteren vorgegebenen Parametern erfolgt, sobald die Steuerungsmittel aktiviert werden. Der Bediener kann somit zunächst eine manuelle Bedienungssteuerung des elektronischen Gerätes vornehmen und dann durch Betätigung der Steuerungsmittel die Bedienungseingabe durch automatische Vorgabe der weiteren Bedienungsparameter beenden.

Die Erfindung wird nachfolgend anhand der beigefügten zeichnung näher erläutert. Es zeigt:

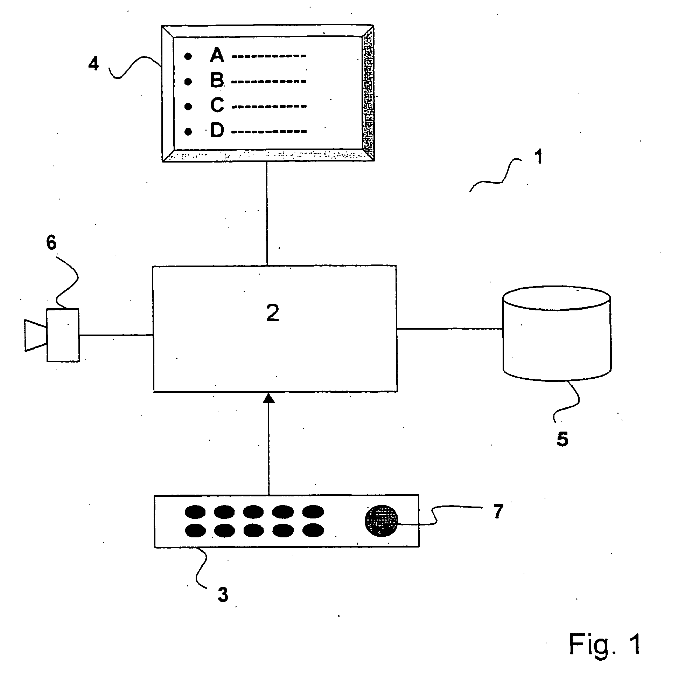

- Figur 1 -: Blockdiagramm eines erfindungsgemäßen elektronischen Gerätes mit unterstützter Bedienungssteuerung.

Die Figur 1 lässt ein Blockdiagramm eines elektronischen Gerätes 1, beispielsweise eines Navigationssystems, eine Kommunikationsgerätes oder eines Unterhaltungssystems, insbesondere für Fahrzeuge erkennen. Das elektronische Gerät 1 halt im Wesentlichen einen Prozessor 2 sowie Bedienungseingabemittel 3 und eine Anzeigeeinheit 4 zur Darstellung einer Bedienungsoberfläche. Weiterhin ist der Prozessor 2 an einen Speicher 5 angekoppelt, auf dem beispielsweise typische Bedienungsprofile einzelner Bediener abgelegt werden können. Insbesondere kann in dem Speicher 5 die üblicherweise von einem Bediener genutzten Parameter für die einzelnen Bedienungsschritte einschließlich von Auswahleingaben abgelegt werden.

Der Prozessor 2 ist weiterhin an ein Mittel 6 zur Erfassung der Belastung eines Bedieners des elektronischen Gerätes 1 angeschlossen. Mit Hilfe des Mittels 6 zur Belastungserfassung kann beispielsweise der Fahrerzustand und die Fahrsituation ermittelt werden. Dabei kann in bekannter Weise die Fahrtauglichkeit des Fahrers z. B. durch Messen der Augenreaktionen, des Pupillendurchmessers, durch Lidschlusserkennung etc. bestimmt und durch Fahrzeugsensoren die Umgebungsbedingungen und die Fahrsituation gemessen werden. So wird die Belastung des Bedieners als relativ hoch eingestuft, wenn z. B. dichter Verkehr herrscht oder das Fahrzeug sehr schnell auf der Autobahn fährt und/oder schlechtes Wetter, wie Nebel oder Regen ist. In einer solchen Situation hat der Fahrer nur eingeschränkte mentale Möglichkeiten für Nebenaufgaben, wie die Bedienung elektronischer Geräte.

Die Eingabe von Parametern bei der Bedienungseingabe über die Bedienungseingabemittel wird nunmehr beispielsweise durch geeignete Programmierung des elektronischen Gerätes 1 so gesteuert, dass die Bedienungseingabe in Abhängigkeit von der Belastung des Bedieners unterstützt wird. Dem Bediener bleibt damit die vollständige Auswahl- bzw. Steuerungsmöglichkeit des elektronischen Gerätes bei geringer Belastung erhalten. Bei einem Anstieg der Belastung werden die Auswahl- und Steuerungsmöglichkeiten des elektronischen Gerätes 1 mehr und mehr automatisiert. Hierzu werden vorgegebene Parameter aus Bedienungsprofilen ausgewählt, die bedienerabhängig in dem Speicher 5 abgelegt sind. Dem Bediener werden damit einzelne Bedienungseingabeschritte bei erhöhter Belastung abgenommen, so dass sich der Bediener mehr auf seine Umgebung konzentrieren kann. Das Verfahren ist für die Fälle sinnvoll einsetzbar, in denen mehrere Bedienschritte erforderlich sind, um eine spezielle Funktion auszuwählen oder eine gewünschte Information abzurufen. Die mehreren Bedienungseingabeschritte dienen in der Regel dazu, die angeforderte Funktion oder Information präziser zu beschreiben. Diese Konkretisierung der Bedienungseingabe erfolgt beispielsweise in einem Dialog durch grafisch unterstützte Tastatureingabe oder Spracheingabe in das elektronische Gerät 1. Für den Fall einer höheren Belastung des Bedieners wird die Anzahl der einzugebenden Parameter beschränkt und der Dialog mit dem Bediener vor Eingabe sämtlicher erforderlichen Parameter beendet. Alle anderen notwendigen Parameter werden beispielsweise durch Auswertung des abgespeicherten Bedienungsprofils geschätzt oder automatisch vorgegeben.

Zudem kann bei der Bedienungseingabe in Abhängigkeit von der Belastung des Bedieners vorgegeben werden, über welche Bedienungseingabemittel, wie z. B. Spracheingabe oder grafisch unterstützte Tastatureingabe (GUI) die Bedienungssteuerung erfolgen soll.

Weiterhin ist ein Steuerungsmittel 7 vorgesehen, um die Bedienungseingabe manuell beenden zu können. Nach Betätigung der Steuerungsmittel 7 werden dann die weiteren erforderlichen Parameter wie vorher erläutert mit Hilfe der gespeicherten Bedienungsprofile geschätzt oder automatisch vorgegeben und die manuelle Bedienungssteuerung damit beendet.

## Patentansprüche

1. Verfahren zur Bedienungssteuerung von elektronischen Geräten (1) mit Bedienungseingabemitteln (3), mit
- Bestimmen eines Maßes für die Belastung eines Bedieners des elektronischen Gerätes, und
- Unterstützung einer Bedienungseingabe des Bedieners durch Ersetzen von Eingaben des Bedieners durch automatische Vorgabe von Parametern aus einem Speicher, wobei der Grad der Unterstützung abhängig von dem Maß der Belastung eingestellt wird.

2. Verfahren nach Anspruch 1, **dadurch gekennzeichnet, dass** bei Bedienungseingaben durch den Benutzer die vom Benutzer eingegebenen Parameter aufgezeichnet und im Speicher abgelegt werden.

3. Verfahren nach Anspruch 1 oder 2, **gekennzeichnet durch** Auswahl der vorgegebenen Parameter aus bedienerabhängig gespeicherten Bedienungsprofilen.

4. Elektronisches Gerät (1) mit einem Prozessor (2), mit Bedienungseingabemitteln (3), und mit Mitteln (6) zur Erfassung der Belastung eines Bedieners des elektronischen Geräts (1), wobei der Prozessor zur Unterstützung der Bedienungseingabe des Bedieners durch Ersetzen von Eingaben des Bedieners durch automatische Vorgabe von Parametern aus einem Speicher, ausgebildet ist, wobei der Grad der Unterstützung abhängig von dem Maß der Belastung eingestellt wird.

5. Elektronisches Gerät (1) nach Anspruch 4, **gekennzeichnet durch** eine Liste zur bedienerabhängigen Speicherung von Bedienungsprofilen, wobei die vorgegebenen Parameter aus der Liste automatisch ausgewählt werden.

6. Elektronisches Gerät (1) nach Anspruch 4 oder 5, **gekennzeichnet durch** Steuerungsmittel zur Beendigung der Bedienungseingabe, wobei die Bedienungssteuerung in Abhängigkeit von **durch** den Bediener über die Bedienungseingabemittel (3) eingegebenen Parametern und von weiteren vorgegebenen Parametern erfolgt, sobald die Steuerungsmittel aktiviert werden.

7. Elektronisches Gerät (1) nach einem der Ansprüche 4 bis 6 für den Betrieb in Fahrzeugen.

## Claims

1. Method for controlling the operation of electronic devices (1) having operating input means (3), comprising the steps of
- determining a measure of the burden on an operator of the electronic device, and
- assisting with an operating input by the operator by replacing the operator's inputs with an automatic predefinition of parameters from a memory, the degree of assistance being set on the basis of the measure of the burden.

2. Method according to Claim 1, **characterized in that**, in the case of operating inputs by the user, the parameters input by the user are recorded and stored in the memory.

3. Method according to Claim 1 or 2, **characterized by** selection of the predefined parameters from operating profiles stored in an operator-dependent manner.

4. Electronic device (1) having a processor (2), having operating input means (3), and having means (6) for detecting the burden on an operator of the electronic device (1), the processor being designed to assist with the operating input by the operator by replacing the operator's inputs with an automatic predefinition of parameters from a memory, the degree of assistance being set on the basis of the measure of the burden.

5. Electronic device (1) according to Claim 4, **characterized by** a list for the operator-dependent storage of operating profiles, the predefined parameters being automatically selected from the list.

6. Electronic device (1) according to Claim 4 or 5, **characterized by** control means for concluding the operating input, operation being controlled on the basis of parameters input by the operator via the operating input means (3) and on the basis of further predefined parameters as soon as the control means are activated.

7. Electronic device (1) according to one of Claims 4 to 6 for operation in vehicles.

## Revendications

1. Procédé de commande d'utilisation d'appareils électroniques (1) munis de moyens de saisie d'utilisation (3), comprenant
- la détermination d'un indice de charge d'un utilisateur de l'appareil électronique et
- l'assistance d'une saisie d'utilisation de l'utilisateur en remplaçant les saisies de l'utilisateur par des valeurs par défaut automatiques des paramètres depuis une mémoire, le degré d'assistance étant fixé en fonction de l'indice de charge.

2. Procédé selon la revendication 1, **caractérisé en ce que** les saisies d'utilisation par l'utilisateur deviennent les paramètres saisis par l'utilisateur et sont stockées dans la mémoire.

3. Procédé selon la revendication 1 ou 2, **caractérisé par** la sélection des paramètres prédéfinis à partir de profils d'utilisation enregistrés en fonction de l'utilisateur.

4. Appareil électronique (1) comprenant un processeur (2), comprenant des moyens de saisie d'utilisation (3) et comprenant des moyens (6) de détection de la charge d'un utilisateur de l'appareil électronique (1), le processeur étant configuré pour assister la saisie d'utilisation de l'utilisateur en remplaçant les saisies de l'utilisateur par des valeurs par défaut automatiques des paramètres depuis une mémoire, le degré d'assistance étant fixé en fonction de l'indice de charge.

5. Appareil électronique (1) selon la revendication 4, **caractérisé par** une liste d'enregistrement en fonction de l'utilisateur de profils d'utilisation, les paramètres prédéfinis étant sélectionnés automatiquement dans la liste.

6. Appareil électronique (1) selon la revendication 4 ou 5, **caractérisé par** des moyens de commande pour mettre fin à la saisie d'utilisation, la commande d'utilisation s'effectuant en fonction des paramètres saisis par l'utilisateur par le biais des moyens de saisie d'utilisation (3) et d'autres paramètres prédéfinis dès que les moyens de commande sont activés.

7. Appareil électronique (1) selon l'une des revendications 4 à 6 pour une utilisation dans des véhicules.
